# EUROPÄISCHE PATENTSCHRIFT

(11) **EP 2 370 781 B1**
(45) Veröffentlichungstag und Bekanntmachung des Hinweises auf die Patenterteilung: **22.01.2020**
(21) Anmeldenummer: 09776592.9
(22) Anmeldetag: 07.05.2009
(51) Int. Cl.: G01B 11/25

(54) **VORRICHTUNG UND VERFAHREN ZUM DREIDIMENSIONALEN OPTISCHEN VERMESSEN VON STARK REFLEKTIERENDEN ODER DURCHSICHTIGEN OBJEKTEN**
DEVICE AND METHOD FOR THE THREE-DIMENSIONAL OPTICAL MEASUREMENT OF STRONGLY REFLECTIVE OR TRANSPARENT OBJECTS
DISPOSITIF ET PROCÉDÉ DE MESURE OPTIQUE TRIDIMENSIONNELLE D'OBJETS FORTEMENT RÉFLÉCHISSANTS OU TRANSPARENTS

(30) Priorität: 19.12.2008 DE 102008064104
(43) Veröffentlichungstag der Anmeldung: 05.10.2011
(73) Patentinhaber: Aimess GmbH, 39288 Burg (DE)
(72) Erfinder: NABS, David, 39288 Burg (DE); GENSECKE, Kai, 39288 Burg (DE)
(74) Vertreter: Grünecker Patent- und Rechtsanwälte PartG mbB
(86) Internationale Anmeldenummer: PCT/EP2009/003275
(87) Internationale Veröffentlichungsnummer: WO 2010/069409

(56) Entgegenhaltungen:
- EP-A1- 1 391 176
- US-A- 4 511 252
- US-A- 5 376 793
- US-A- 5 719 395
- US-A1- 2003 137 673
- US-B1- 7 440 590

## Beschreibung

### Gebiet der Erfindung

Die Erfindung betrifft eine Vorrichtung und ein Verfahren zum dreidimensionalen Vermessen von Objekten mit einem topometrischen Messverfahren.

### Stand der Technik

Die dreidimensionale Erfassung von Objektoberflächen mittels optischer Triangulationssensoren nach dem Prinzip der Topometrie ist hinreichend bekannt. Hierbei werden zum Beispiel unterschiedliche Streifenmuster auf das zu vermessende Objekt projiziert, von einer oder mehreren Kameras beobachtet und anschließend rechnergestützt ausgewertet. Die Auswerteverfahren sind zum Beispiel Phasen-Shift-Verfahren (Phasenschiebeverfahren), der codierte Lichtansatz oder das Heterodynverfahren.

Ein Projektor beleuchtet das Messobjekt zeitlich sequentiell mit Mustern von parallelen hellen und dunklen Streifen gleicher oder unterschiedlicher Breite. In Abhängigkeit von der Form des Objekts und der Blickrichtung wird das projizierte Streifenmuster deformiert. Die Kamera bzw. die Kameras registrieren das projizierte Streifenmuster unter einem bekannten Blickwinkel zur Projektionsrichtung. Für jedes Projektionsmuster wird mit jeder Kamera ein Bild aufgenommen. Zur Auswertung der Messungen ist die Grenzlinie (die Kante) zwischen einem hellen und einem dunklen Streifen maßgeblich.

Um das gesamte Objekt zu vermessen wird das Muster über das Objekt bewegt (scannen). Für jeden Bildpunkt aller Kameras entsteht so eine zeitliche Folge von unterschiedlichen Helligkeitswerten. Zu einem gegebenen Objektpunkt sind die Bildkoordinaten im Kamerabild bekannt. Aus der Folge von Helligkeitswerten, die aus der Bildsequenz für jeden Kamerabildpunkt gemessen wurden, kann die Nummer des Streifens berechnet werden. Im einfachsten Fall erfolgt das über einen Binärkode (z.B. einen Gray-Code) der die Nummer des Streifens als diskrete Koordinate im Projektor kennzeichnet.

Eine höhere Genauigkeit ist mit dem sogenannten Phasenschiebeverfahren zu erreichen, da es eine nicht diskrete Koordinate bestimmen kann, wobei die Phasenlage eines modulierten Signals durch punktweise Intensitätsmessungen bestimmt wird. Die Phasenlage des Signals wird dabei mindestens zweimal um einen bekannten Wert verschoben, während an einem Punkt die Intensität gemessen wird. Aus drei oder mehr Messwerten kann die Phasenlage berechnet werden. Das Phasenschiebeverfahren kann entweder als Ergänzung eines Gray-Codes oder als absolut messendes Heterodynverfahren (mit mehreren Wellenlängen) eingesetzt werden.

Die Grundlagen und praktischen Anwendungen solcher topometrischer Messverfahren werden beispielsweise in Bernd Breuckmann: "Bildverarbeitung und optische Messtechnik in der industriellen Praxis", 1993, Franzis-Verlag GmbH, München ausführlich beschrieben.

Möchte man jedoch Objekte vermessen, die sehr stark reflektierend sind, wie z.B. die lackierte Karosserie eines Autos, oder die sogar durchlässig für sichtbares Licht sind, wie beispielsweise Glasflächen, sind die bisherigen auf Streifenprojektion basierenden Messsysteme nicht in der Lage, derartige Objekte topometrisch zu erfassen, da auf der Oberfläche solcher Objekte kein Projektionsmuster sichtbar wird.

Aus DE 202 16 852 U1 ist ein Ansatz bekannt, um stark reflektierende Oberflächen zu prüfen, die durch Reflektometrie oder Deflektometrie beispielsweise Beulen oder Dellen detektieren können. Diese Vorrichtung ist jedoch aufgrund des Messprinzips ungeeignet, ein Objekt mit ausreichender Genauigkeit bzw. nötiger Auflösung zu erfassen, da die laterale Auflösung zu gering ist.

Aus EP 1 391 176 A1 ist eine Vorrichtung und ein Verfahren bekannt, um die Topometrie einer Oberfläche mit infrarotem Licht zu vermessen.

Die Güte der Messergebnisse bei der dreidimensionalen Vermessung von Objekten mittels Streifenprojektion ist stark vom Kontrast der Projektion zum Umgebungslicht abhängig.

### Beschreibung der Erfindung

Angesichts der Nachteile des Stands der Technik, liegt der Erfindung das Problem zugrunde, eine Vorrichtung zum dreidimensionalen optischen Vermessen von für sichtbares Licht durchlässigen oder das Licht stark reflektierenden Objekten mit einem topometrischen Messverfahren bereit zu stellen, welche gute Kontraste im Projektionsmuster auf den Objekten liefert.

Das genannte Problem wird gelöst durch die Vorrichtung nach Anspruch 1 und das Verfahren nach Anspruch 10.

Die erfindungsgemäße Vorrichtung zum dreidimensionalen Vermessen eines Objekts umfasst eine erste Projektionseinrichtung mit einer ersten infraroten Lichtquelle zum Projizieren eines bewegbaren ersten Musters auf das Objekt, wodurch das projizierte erste Muster auf dem Objekt als Erwärmungsverteilung einprägbar ist; und wenigstens eine Bildaufnahmeeinrichtung zum Aufnehmen von Bildern der auf dem Objekt eingeprägten Erwärmungsverteilung in einem infraroten Spektralbereich wobei die erste Projektionseinrichtung dazu ausgebildet ist, das erste Muster bewegbar auf das Objekt zu projizieren und zwischen den Aufnahmen zu versetzen.

Die Verwendung von infrarotem Licht zur Projektion des Musters hat den Vorteil, dass sich das projizierte Muster auf dem zu vermessenden Objekt als Erwärmungsverteilung einprägt, d.h., dass die entsprechenden mit infraroter Strahlung von der Projektionseinrichtung beleuchteten Flächen des Objekts sich gegenüber den nicht derartig beleuchteten Flächen des Objekts durch eine Temperaturdifferenz unterscheiden. Dieser Temperaturunterschied äußert sich wiederum in einer unterschiedlichen Intensität der Abstrahlung im infraroten Wellenlängenbereich, insbesondere der sogenannten Wärmestrahlung, die z.B. mit einer Wärmebildkamera aufgenommen werden kann.

Dabei ist zu beachten, dass der Wellenlängenbereich des einstrahlten infraroten Musters nicht notwendigerweise mit dem Wellenlängenbereich übereinstimmt, der vom Objekt abgestrahlt wird. Dementsprechendes gilt auch für den Wellenlängenbereich für den die Bildaufnahmeeinrichtung empfindlich ist.

Das projizierte Muster kann insbesondere punktförmig, linien- oder flächenhaft ausgebildet sein.

Eine Weiterbildung der erfindungsgemäßen Vorrichtung besteht darin, dass sie eine zweite Projektionseinrichtung mit einer zweiten infraroten Lichtquelle zum Projizieren eines zweiten bewegbaren Musters auf das Objekt umfassen kann. Auf diese Weise können Kombinationen der beiden Muster erzielt werden, wobei insbesondere die zweite Projektionseinrichtung so angeordnet sein kann, dass das zweite Muster aus einer anderen Richtung und mit einem anderen Winkel projiziert werden kann.

Eine andere Weiterbildung besteht darin, dass die erste infrarote Lichtquelle der ersten Projektionseinrichtung eine erste Emissionsfläche aufweist und/oder wobei die zweite infrarote Lichtquelle der zweiten Projektionseinrichtung eine zweite Emissionsfläche aufweisen kann. Verbunden mit einer hohen Abstrahlfähigkeit der geheizten Emissionsfläche wird die erzeugte Wärme schnell und effizient als Infrarotstrahlung abgegeben.

Eine andere Weiterbildung besteht darin, dass die jeweilige Emissionsfläche durch eine jeweilige Widerstandsheizung erhitzbar ist. Über die elektrische Heizleistung ist eine schnelle direkte Modulation der IR-Strahlung ermöglicht.

Eine andere Weiterbildung besteht darin, dass die jeweilige Emissionsfläche selbst das zu projizierende Muster definieren kann, oder dass das jeweilige Muster durch ein jeweiliges Musterelement mit für infrarotes Licht durchlässigen und undurchlässigen Flächen definiert werden kann, wobei das jeweilige Musterelement zwischen der jeweiligen Emissionsfläche und dem Objekt angeordnet sein kann.

Eine andere Weiterbildung besteht darin, dass das jeweilige Muster ein Streifenmuster ist. Dies hat den Vorteil, dass die Kante zwischen den Streifen eine gerade Linie ist, deren Deformation auf dem Objekt mit der Bildaufnahmeeinrichtung aufgenommen wird.

Eine andere Weiterbildung besteht darin, dass die Vorrichtung weiterhin eine Auswerteeinrichtung zum Auswerten der von der Bildaufnahmeeinrichtung aufgenommenen Bilder umfassen kann. Diese Auswerteeinrichtung kann z.B. durch eine Rechnereinheit realisiert werden auf der eine geeignetes Programm zur topometrischen Analyse der aufgenommenen Bilder ausgeführt wird. Insbesondere kann z.B. aus der Deformation einer linienförmigen Kante, auf die entsprechende Oberflächenform des Objekts zurückgerechnet werden.

Eine andere Weiterbildung besteht darin, dass die jeweilige Projektionseinrichtung einen mit der Emissionsfläche versehenen Zylinder aufweisen können, der um seine Zylinderachse drehbar ist. Dies hat den Vorteil, dass auf einfache Weise ein bewegbares Muster (beispielsweise ein Streifenmuster der Emissionsfläche oder eines Musterelements) auf das Objekt projiziert werden kann.

Eine andere Weiterbildung besteht darin, dass die Bildaufnahmeeinrichtung für infrarote Strahlung mit einer Wellenlänge im Bereich von 1 µm bis 1 mm, bevorzugt im Bereich von 3 µm bis 50 µm, besonders bevorzugt im Bereich von 3 µm bis 15 µm, höchst bevorzugt im Bereich von 3 µm bis 5 µm oder 8 µm bis 14 µm sensitiv sein kann. Dies ermöglicht insbesondere den Einsatz von Wärmebildkameras, die für die Thermografie Verwendung finden, und für den mittleren Infrarotbereich (3-15 µm) empfindlich sind. Für den Spektralbereich von 8 bis 14 µm können z.B. Gallium-Arsenid-Detektoren oder Cadmium-Quecksilber-Tellurid-Detektoren verwendet werden.

Das oben genannte Problem wird weiterhin gelöst durch das erfindungsgemäße Verfahren zum dreidimensionalen Vermessen eines Objekts mit den Schritten: Projizieren eines ersten infraroten Musters auf das Objekt mit einer ersten Projektionseinrichtung mit einer ersten infraroten Lichtquelle, wodurch sich das projizierte erste Muster auf dem Objekt als Erwärmungsverteilung einprägt; Aufnehmen von Bildern der auf dem Objekt eingeprägten Erwärmungsverteilung mit wenigstens einer für infrarote Strahlung sensitiven Bildaufnahmeeinrichtung; und Auswerten der von der Bildaufnahmeeinrichtung aufgenommenen Bilder in einer Auswerteeinrichtung mit einem topometrischen Auswerteverfahren; wobei das Muster zwischen den Aufnahmen versetzt wird.

Eine Weiterbildung des erfindungsgemäßen Verfahrens besteht darin, dass es den folgenden weiteren Schritt aufweisen kann: Projizieren eines zweiten infraroten Musters auf das Objekt mit einer zweiten Projektionseinrichtung mit einer zweiten infraroten Lichtquelle.

Eine andere Weiterbildung besteht darin, dass das jeweilige Muster ein Streifenmuster sein kann.

Eine andere Weiterbildung besteht darin, dass jedes Muster durch die jeweilige Projektionseinrichtung mit einer jeweiligen vorgegebenen Geschwindigkeit über das Objekt bewegt werden kann. Auf diese Weise wird das Objekt abgetastet (gescannt), wobei zeitversetzt Aufnahmen mit der Bildaufnahmeeinrichtung (Kamera) gemacht werden.

Eine andere Weiterbildung besteht darin, dass die jeweilige Projektionseinrichtung einen mit einer jeweiligen Emissionsfläche versehenen Zylinders aufweisen können, der um seine Zylinderachse gedreht wird.

Eine andere Weiterbildung besteht darin, dass die wenigstens eine Bildaufnahmeeinrichtung mit den Projektionseinrichtungen getriggert werden kann. Auf diese Weise können vorbestimmte Sequenzen von Kombinationen der projizierten Muster auf der Oberfläche aufgenommen werden.

Eine andere Weiterbildung besteht darin, dass das Verfahren den weiteren Schritt umfassen kann: Auswerten der von der Bildaufnahmeeinrichtung aufgenommenen Bilder in einer Auswerteeinrichtung mit einem topometrischen Auswerteverfahren. Damit kann die dreidimensionale Oberflächenstruktur des Objekts analysiert werden.

Weitere bevorzugte Ausführungsformen der Erfindung werden im Nachfolgenden unter Bezugnahme auf die Zeichnungen beschrieben.

### Kurzbeschreibung der Zeichnungen

- Fig. 1: zeigt eine erste Ausführungsform der erfindungsgemäßen Vorrichtung.
- Fig. 2: zeigt eine zweite Ausführungsform der erfindungsgemäßen Vorrichtung.

### Beschreibung der Ausführungsformen

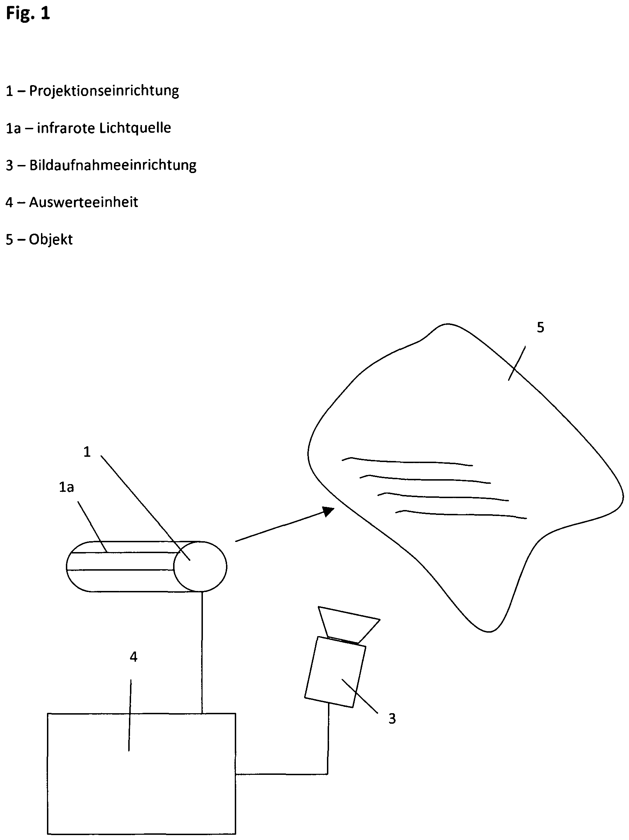

Die Figur 1 zeigt eine erste Ausführungsform der erfindungsgemäßen Vorrichtung zum dreidimensionalen optischen Vermessen eines lichtdurchlässigen oder stark reflektierenden Objekts 5 mit einem topometrischen Messverfahren, die mindestens einen Projektor 1 mit hoher infraroter Lichtintensität aufweist, um gute Kontrastverhältnisse zu erhalten.

Die Infrarotlichtquelle 1a des Projektors 1 basiert auf einer Widerstandsheizung die eine Emissionsfläche 1a erhitzt. Verbunden mit einer hohen Abstrahlfähigkeit der geheizten Emissionsfläche wird die erzeugte Wärme schnell und effizient als Infrarotstrahlung abgegeben. Über die elektrische Heizleistung wird außerdem eine schnelle direkte Modulation der IR-Strahlung ermöglicht. Dabei bildet die Emissionsfläche in diesem Beispiel direkt das zu projizierende Streifenmuster. Eine andere Möglichkeit besteht darin, dass eine Maske mit dem Muster zwischen der Emissionsfläche und dem Objekt angeordnet wird.

Da das Streifenmuster über die Oberfläche des Objekts 5 wandern muss, stellt die erfindungsgemäße Einrichtung ein bewegliches Streifenmuster zur Verfügung, das beispielsweise in Form eines mit der Emissionsfläche versehenen Zylinders 1 aufweist, der um seine Zylinderachse rotieren kann.

Das Objekt 5 mit dem projizierten Muster wird von einer Wärmebildkamera 3 aufgenommen. Die Signale bzw. Daten von der Kamera werden dann einer Auswerteeinrichtung 4 (z.B. Computer) zugeführt, auf der ein Programm zur topometrischen Analyse ausgeführt wird.

Abhängig vom Material des Objektes 5 und dessen Wärmeleitfähigkeit, kann die Intensität der infraroten Strahlung von der Projektionseinrichtung 1 so gewählt werden, dass der Temperaturunterschied einerseits groß genug ist, um eine Kante (einen Unterschied) zwischen einer beleuchteten und einer unbeleuchteten Fläche mit der Bildaufnahmeeinrichtung (Kamera) 3 zu erfassen, andererseits jedoch so gering, dass diese Kante während der Aufnahme auf Grund von Wärmediffusion nicht wesentlich aufgeweicht wird. Dies ist darin begründet, dass die Zeitdauer der Wärmediffusion im Wesentlichen umgekehrt proportional zur Temperaturdifferenz ist. Mit der Wahl einer geeigneten Intensität der infraroten Strahlung und einer geeigneten Zeitdauer zwischen zeitlich benachbarten Aufnahmen kann ein guter Kontrast zwischen den beleuchteten und den unbeleuchteten Bereichen des Objekts erzielt werden.

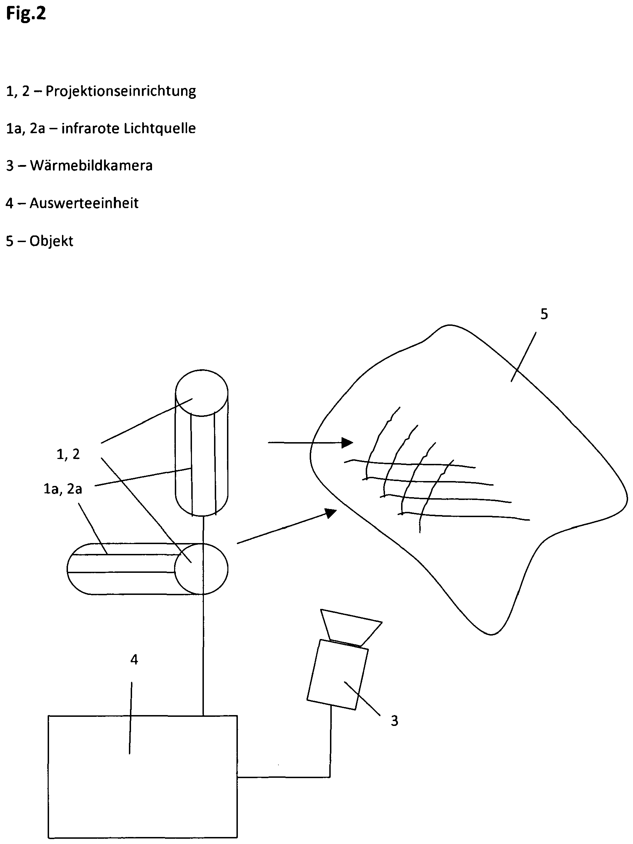

Fig. 2 zeigt eine zweite Ausführungsform der erfindungsgemäßen Vorrichtung. Gleiche Bezugszeichen in Fig. 1 und Fig. 2 bezeichnen gleiche Elemente.

Gegenüber der ersten Ausführungsform nach Fig. 1 weist die zweite Ausführungsform einen zweiten Projektor 2, ebenfalls in Form eines Zylinders, auf. Die zwei zylinderförmigen in einem definierten Winkel zueinander rotierende Emissionsmuster werden auf die Objektoberfläche projiziert. Dabei rotieren beide Zylinder, jeder mit einer definierten Geschwindigkeit, um ihre Zylinderachse. Das dadurch neu entstehende Projektionsmuster weist Eigenschaften auf, die sich schneller und hochauflösend auswerten lassen. Es entstehen beispielsweise spezielle Musterrungen auf der Oberfläche die von der Rotationsgeschwindigkeit und dem Winkel zwischen den Zylindern 1, 2 abhängig ist und definiert eingestellt werden können, um gezielt spezielle Merkmale der Objektoberflächen besser analysieren zu können.

Des Weiteren ist die Kamera 3 (Aufnahmeeinheit) mit den Projektoren 1, 2 so getriggert, dass man nur durch Variation der Triggerung zusätzliche spezielle Musterungen auf der Oberfläche analysieren kann.

## Patentansprüche

1. Vorrichtung zum dreidimensionalen Vermessen eines Objekts (5), umfassend:
eine erste Projektionseinrichtung (1) mit einer ersten infraroten Lichtquelle (1a) zum Projizieren eines ersten Musters auf das Objekt, wodurch das projizierte erste Muster auf dem Objekt als Erwärmungsverteilung einprägbar ist;
wenigstens eine Bildaufnahmeeinrichtung (3) zum Aufnehmen von Bildern der auf dem Objekt eingeprägten Erwärmungsverteilung in einem infraroten Spektralbereich; und
eine Auswerteeinrichtung (4) zum topometrischen Auswerten der von der Bildaufnahmeeinrichtung aufgenommenen Bilder;
**dadurch gekennzeichnet, dass**
die erste Projektionseinrichtung dazu ausgebildet ist, das erste Muster bewegbar auf das Objekt zu projizieren und zwischen den Aufnahmen zu versetzen.

2. Vorrichtung nach Anspruch 1, umfassend eine zweite Projektionseinrichtung (2) mit einer zweiten infraroten Lichtquelle (2a) zum Projizieren eines zweiten bewegbaren Musters auf das Objekt.

3. Vorrichtung nach Anspruch 2, wobei die erste infrarote Lichtquelle der ersten Projektionseinrichtung eine erste Emissionsfläche aufweist und/oder wobei die zweite infrarote Lichtquelle der zweiten Projektionseinrichtung eine zweite Emissionsfläche aufweist.

4. Vorrichtung nach Anspruch 3, wobei die jeweilige Emissionsfläche durch eine jeweilige Widerstandsheizung erhitzbar ist.

5. Vorrichtung nach Anspruch 3 oder 4, wobei die jeweilige Emissionsfläche selbst das zu projizierende Muster definiert, oder wobei das jeweilige Muster durch ein jeweiliges Musterelement mit für infrarotes Licht durchlässigen und undurchlässigen Flächen definiert wird und das jeweilige Musterelement zwischen der jeweiligen Emissionsfläche und dem Objekt angeordnet ist.

6. Vorrichtung nach einem der voranstehenden Ansprüche, wobei das jeweilige Muster ein Streifenmuster ist.

7. Vorrichtung nach einem der Ansprüche 3 bis 6, worin die jeweilige Projektionseinrichtung einen mit der Emissionsfläche versehenen Zylinders aufweist, der um seine Zylinderachse drehbar ist.

8. Vorrichtung nach einem der voranstehenden Ansprüche, wobei die Bildaufnahmeeinrichtung für infrarote Strahlung mit einer Wellenlänge im Bereich von 1 µm bis 1 mm, bevorzugt im Bereich von 3 µm bis 50 µm, besonders bevorzugt im Bereich von 3 µm bis 15 µm, höchst bevorzugt im Bereich von 3 µm bis 5 µm oder 8 µm bis 14 µm sensitiv ist.

9. Verfahren zum dreidimensionalen Vermessen eines Objekts (5) mit den Schritten:
Projizieren eines ersten infraroten Musters auf das Objekt mit einer ersten Projektionseinrichtung (1) mit einer ersten infraroten Lichtquelle (1a), wodurch sich das projizierte erste Muster auf dem Objekt als Erwärmungsverteilung einprägt;
Aufnehmen von Bildern der auf dem Objekt eingeprägten Erwärmungsverteilung mit wenigstens einer für infrarote Strahlung sensitiven Bildaufnahmeeinrichtung (3); und
Auswerten der von der Bildaufnahmeeinrichtung aufgenommenen Bilder in einer Auswerteeinrichtung (4) mit einem topometrischen Auswerteverfahren;
**dadurch gekennzeichnet, dass**
das Muster zwischen den Aufnahmen versetzt wird.

10. Verfahren nach Anspruch 9, mit dem weiteren Schritt:
Projizieren eines zweiten infraroten Musters auf das Objekt mit einer zweiten Projektionseinrichtung (2) mit einer zweiten infraroten Lichtquelle (2a).

11. Verfahren nach Anspruch 10, wobei das jeweilige Muster ein Streifenmuster ist.

12. Verfahren nach einem der Ansprüche 10 bis 11, wobei jedes Muster durch die jeweilige Projektionseinrichtung mit einer jeweiligen vorgegebenen Geschwindigkeit über das Objekt bewegt wird.

13. Verfahren nach Anspruch 12, wobei die jeweilige Projektionseinrichtung einen mit einer jeweiligen Emissionsfläche versehenen Zylinders aufweist, der um seine Zylinderachse gedreht wird.

14. Verfahren nach Anspruch 12 oder 13, wobei die wenigstens eine Bildaufnahmeeinrichtung mit den Projektionseinrichtungen getriggert wird.

## Claims

1. Device for the three-dimensional measurement of an object (5) comprising:
a first projection device (1) having a first infrared light source (1a) for projecting a first pattern onto the object, whereby the projected first pattern leaves an impression of itself as a heat distribution on the object; and
at least one image capturing device (3) for capturing images of the heat distribution impressed on the object in an infrared spectral range; and
an analysis device (4) for topometrically analyzing the images captured by the image capturing device;
**characterized in that**
the first projection device is configured to movably project the first pattern onto the object and to displace it between captured images.

2. Device in accordance with Claim 1 comprising a second projection device (2) having a second infrared light source (2a) for projecting a displaceable second pattern onto the object.

3. Device according to Claim 2 wherein the first infrared light source of the first projection device has a first emission surface and / or wherein the second infrared light source of the second projection device has a second emission surface.

4. Device according to Claim 3 wherein the respective emission surface can be heated by a respective resistance heater.

5. Device according to Claim 3 or 4 wherein the respective emission surface itself defines the pattern to be projected, or wherein the respective pattern is defined by a respective pattern element with surfaces transparent to infrared light and surfaces not transparent to infrared light, wherein the respective pattern element is arranged between the respective emission surface and the object.

6. Device according to one of the preceding claims wherein the respective pattern is a stripe pattern.

7. Device according to one of the Claims 3 to 6 wherein the respective projection device has a cylinder that is provided with the emission surface, wherein the cylinder can be rotated around its cylindrical axis.

8. Device according to one of the preceding claims wherein the image capturing device is sensitive to infrared radiation with a wavelength in the range from 1 µm to 1 mm, preferably in the range from 3 µm to 50 µm, more preferably in the range from 3 µm to 15 µm, most preferably in the range from 3 µm to 5 µm or 8 µm to 14 µm.

9. Method for the three-dimensional measurement of an object (5) with the steps:
projecting a first infrared pattern onto the object with a first projection device (1) with a first infrared light source (1a), whereby the projected first pattern leaves an impression of itself as a heat distribution on the object;
capturing images of the heat distribution impressed on the object with at least one image capturing device (3) sensitive to infrared radiation; and
analysing the images captured by the image capturing device in an analysis device (4) with a topometric analysis method;
**characterized in that**
the pattern is shifted between the image captures.

10. Method according to Claim 9 with the additional step:
projection of a second infrared pattern onto the object with a second projection device (2) with a second infrared light source (2a).

11. Method according to Claim 10 wherein the respective pattern is a stripe pattern.

12. Method according to one of the Claims 10 to 11 wherein each pattern is displaced across the object by the respective projection device at a respective stipulated speed.

13. Method according to Claim 12 wherein the respective projection device has a cylinder that is provided with a respective emission surface, wherein the cylinder is rotated around its cylindrical axis.

14. Method according to Claim 12 or 13 wherein the at least one image capturing device is triggered with the projection devices.

## Revendications

1. Dispositif pour assurer une mesure tridimensionnelle d'un objet (5), comprenant :
un premier dispositif de projection (1) avec une première source de lumière infrarouge (1a) pour projeter un premier motif sur l'objet, le premier motif projeté pouvant ainsi être gravé sur l'objet en tant que répartition d'échauffement ;
au moins un dispositif de prise de vue (3) pour relever des images de la répartition d'échauffement dans une plage spectrale infrarouge ; et
un dispositif de traitement de données (4) pour assurer le traitement topométrique des images relevées par le dispositif de prise de vue ;
**caractérisé en ce que**
le premier dispositif de projection est conçu pour projeter le premier motif de manière mobile sur l'objet, et le décaler entre les prises de vue.

2. Dispositif selon la revendication 1, comprenant un deuxième dispositif de projection (2) avec une deuxième source de lumière infrarouge (2a) pour projeter un deuxième motif mobile sur l'objet.

3. Dispositif selon la revendication 2, dans lequel la première source de lumière infrarouge du premier dispositif de projection présente une première surface d'émission et/ou la deuxième source de lumière infrarouge du deuxième dispositif de projection présente une deuxième surface d'émission.

4. Dispositif selon la revendication 3, dans lequel la surface d'émission respective peut être échauffée par un chauffage à résistance respectif.

5. Dispositif selon la revendication 3 ou la revendication 4, dans lequel la surface d'émission respective définit elle-même le motif à projeter, ou bien dans lequel le motif respectif est défini par un élément de motif respectif avec des surfaces perméables et non perméables à la lumière infrarouge, et l'élément de motif respectif est agencé entre la surface d'émission respective et l'objet.

6. Dispositif selon l'une des revendications précédentes, dans lequel le motif respectif est un motif de bande.

7. Dispositif selon l'une des revendications 3 à 6, dans lequel le dispositif de projection respectif comprend un cylindre muni de la surface d'émission et pouvant tourner autour de son axe de cylindre.

8. Dispositif selon l'une des revendications précédentes, dans lequel le dispositif de prise de vue est sensible au rayonnement infrarouge d'une longueur d'onde dans la plage de 1 µm à 1 mm, de préférence dans la plage de 3 µm à 50 µm, de manière particulièrement préférée dans la plage de 3 µm à 15 µm, de manière la plus préférée dans la plage de 3 µm à 5 µm ou de 8 µm à 14 µm.

9. Procédé pour assurer une mesure tridimensionnelle d'un objet (5), comprenant les étapes suivantes :
la projection d'un premier motif infrarouge sur l'objet à l'aide d'un premier dispositif de projection (1) avec une première source de lumière infrarouge (1a), le premier motif projeté se gravant ainsi sur l'objet en tant que répartition d'échauffement ;
le relevé d'image de la répartition d'échauffement gravée sur l'objet à l'aide d'au moins un dispositif de prise de vue (3) sensible au rayonnement infrarouge ;
et le traitement des images relevées à l'aide du dispositif de prise de vue, dans un dispositif de traitement de données (4), moyennant un procédé de traitement topométrique ;
**caractérisé en ce que**
l'on décale le motif entre les prises de vue.

10. Procédé selon la revendication 9, comprenant l'étape supplémentaire suivante :
la projection d'un deuxième motif infrarouge sur l'objet à l'aide d'un deuxième dispositif de projection (2) avec une deuxième source de lumière infrarouge (2a).

11. Procédé selon la revendication 10, d'après lequel le motif respectif est un motif de bande.

12. Procédé selon l'une des revendications 10 à 11, d'après lequel chaque motif est déplacé par-dessus l'objet par l'intermédiaire du dispositif de projection respectif, avec une vitesse prédéterminée respective.

13. Procédé selon la revendication 12, d'après lequel le dispositif de projection respectif comprend un cylindre muni d'une surface d'émission respective, que l'on fait tourner autour de son axe de cylindre.

14. Procédé selon la revendication 12 ou la revendication 13, d'après lequel ledit au moins un dispositif de prise de vue est déclenché avec les dispositifs de projection.
